# EUROPEAN PATENT APPLICATION

(11) **EP 1 777 424 A2**
(43) Date of publication of application: **25.04.2007**
(21) Application number: 06017549.4
(22) Date of filing: 23.08.2006
(51) Int. Cl.: F16C 33/66

(54) **Rotating body oiling apparatus**

(30) Priority: 21.09.2005 JP 2005273233; 12.06.2006 JP 2006161799
(71) Applicant: Komori Corporation, Sumida-ku Tokyo (JP)
(72) Inventor: Iyokawa, Kazuya, Noda-shi Chiba (JP)
(74) Representative: UEXKÜLL & STOLBERG

(57) **Abstract**

A rotating body oiling apparatus, including a plate cylinder (21) rotatably supported in a frame (23) via a bearing (22), and a pump (7) for supplying a lubricating oil (G) to the bearing (22), and discharging the lubricating oil (G) to an outside of the bearing (22), increases the feed amount of the lubricating oil (G) when the rotational speed of the plate cylinder (21) is equal to or higher than a predetermined rotational speed (No).

## Description

### Technical Field

This invention relates to a rotating body oiling apparatus.

### Background Art

Generally, a web rotary press (or printing machine) is furnished with a printing unit, a drying device, a cooling device, afoldingdevice, andadeliverydevice. Within these devices, various rotating bodies, such as cylinders or rollers, are rotatably supported by bearings. A web continuously supplied into the printing machine is passed through these rotating bodies to undergo various types of printing, and is cut to a predetermined shape. Then, the resulting sheet is folded to form a signature, which is discharged.

At this time, the respective bearings are supplied with a lubricating oil from an oiling apparatus, and lubrication and cooling are performed at the bearing portions rotating at high speeds. By so doing, wear between the rotating bodies and the bearings is kept to a minimum, rust formation is prevented, thermal expansion due to frictional heating is suppressed, and seizure is prevented. The oiling apparatus draws up the lubricating oil, stored in an oil bath, by means of a,pump, adjusts its pressure and flow rate, and force-feeds the so adjusted lubricating oil to the bearing portions. The lubricating oil, which has finished lubrication and cooling, is passed through a filter, returned to the oil bath again, and recirculated.

Such a conventional rotating body oiling apparatus is disclosed, for example, in Japanese Patent Application Laid-Open No. 1988-219992.

In recent years, the amount of heat generation of each bearing has tended to increase with the speeding of the web rotary press. Bearings for supporting a cylinder rotatably, in particular, are used under high pre-load and high load conditions, so that their amounts of heat generation due to high rotational speeds become great. If, as a result, the bearing portions are exposed to high temperatures, problems ascribed to excessive pre-load, such as a shortened life, throw-on and throw-off failure, and plate registration failure, may occur. To prevent these problems, the bearing portions have been supplied with a large amount of a lubricating oil.

With the conventional rotating body oiling apparatus, however, a predetermined amount of a lubricating oil has been supplied to the bearing portions based on the amount of heat generation or a temperature change of the bearing portions occurring during quick rotation. During stoppage and slow rotation, therefore, there has been a high possibility for oil leakage because of a large amount of oil supply (called feed oil amount). Moreover, the bearing portions have used a non-contact (labyrinth) seal mode, and this non-contact seal mode is likely to deteriorate sealing performance during stoppage and slow rotation. To prevent oil leakage, or enhance sealing properties, during stoppage and slow rotation, it may be attempted to supply a predetermined amount of a lubricating oil to the bearing portions based on the amount of heat generation or a temperature change of the bearing portions occurring during stoppage and slow rotation. This attempt, however, makes it impossible to supply a sufficient amount of oil, which is necessary for cooling during quick rotation, to the bearing portions, thereby arousing a problem such as seizure. That is, the conventional rotating body oiling apparatus may be able to maintain sealing performance only in a limited operating region of the printing machine.

The present invention has been accomplished as a solution to the above-described problems. It is an object of the invention to provide a rotating body oiling apparatus which can prevent oil leakage from bearing portions during stoppage and slow rotation, and can supply the bearing portions with a sufficient feed oil amount necessary for cooling during quick rotation, by switching the feed oil amount according to the rotational speed of the machine.

### Summary of the Invention

A first aspect of the present invention is a rotating body oiling apparatus including a rotating body rotatably supported in a frame via a bearing, and oil supply means for supplying a lubricating oil to the bearing, and discharging the lubricating oil to an outside of the bearing,
comprising control means which controls the oil supply means to increase a feed amount of the lubricating oil when a rotational speed of the rotating body is equal to or higher than a predetermined rotational speed.

According to a second aspect of the present invention, the rotating body oiling apparatus may further comprise bypass flow rate variable means for bypassing part of the lubricating oil to be supplied, and rendering a flow rate of the bypassed part variable, and the control means may control the bypass flow rate variable means to increase the feed amount of oil supplied to the bearing when the rotational speed of the rotating body is equal to or higher than a predetermined rotational speed.

According to a third aspect of the present invention, the bypass flow rate variable means may comprise a first bypass pipe provided with a first valve, a second bypass pipe provided with a second valve smaller in valve opening than the first valve, and a switching valve for supplying the part of the lubricating oil to the first bypass pipe or the second bypass pipe.

According to a fourth aspect of the present invention, the control means may control the switching valve to supply the lubricating oil to the second bypass pipe when the rotational speed of the rotating body is equal to or higher than a predetermined rotational speed; and may control the switching valve to supply the lubricating oil to the first bypass pipe when the rotational speed of the rotating body is equal to or lower than a predetermined rotational speed.

According to a fifth aspect of the present invention, the rotating body oiling apparatus may further comprise bypass means for bypassing part of the lubricating oil, which is to be supplied, by an opening and closing action, and the control means may control the bypass means to increase the feed amount of oil supplied to the bearing when the rotational speed of the rotating body is equal to or higher than a predetermined rotational speed.

According to a sixth aspect of the present invention, the bypass means may comprise an opening and closing valve for bypassing the part of the lubricating oil, which is to be supplied, to a bypass pipe, and a valve provided in the bypass pipe.

According to a seventh aspect of the present invention, the control means may control the opening and closing valve not to supply the lubricating oil to the bypass pipe when the rotational speed of the rotating body is equal to or higher than a predetermined rotational speed; and may control the opening and closing valve to supply the lubricating oil to the bypass pipe when the rotational speed of the rotating body is equal to or lower than a predetermined rotational speed.

According to an eighth aspect of the present invention, the rotating body oiling apparatus may further comprise flow control means for rendering a flow rate of the lubricating oil, which is to be supplied, variable, and the control means may control the flow control means to increase the feed amount of oil supplied to the bearing when the rotational speed of the rotating body is equal to or higher than a predetermined rotational speed.

According to a ninth aspect of the present invention, the flow control means may comprise a pump for supplying the lubricating oil to the bearing, and a pump motor for adjusting an amount of discharge from the pump.

According to a tenth aspect of the present invention, the control means may control the pump motor to increase the feed amount of oil supplied to the bearing when the rotational speed of the rotating body is equal to or higher than a predetermined rotational speed; and may control the pump motor to decrease the feed amount of oil supplied to the bearing when the rotational speed of the rotating body is equal to or lower than a predetermined rotational speed.

According to an eleventh aspect of the present invention, when the rotational speed of the rotating body is equal to or lower than a predetermined rotational speed, and the rotating body stops, after the rotational speed of the rotating body is equal to or higher than a predetermined rotational speed, the control means may control the oil supply means to supply the oil feed amount smaller than the feed amount of oil supplied when the rotational speed of the rotating body is equal to or higher than a predetermined rotational speed.

According to the first, second, fifth and eighth aspects, the feed oil amount can be switched according to the rotational speed of the machine. Thus, oil leakage from the bearing portions can be prevented during stoppage and slow rotation, and a sufficient feed oil amount for cooling can be supplied to the bearing portions during quick rotation.

According to the third, sixth and ninth aspects, the flow rate of the lubricating oil supplied to the bearing portions can be controlled using a simple configuration.

According to the fourth, seventh and tenth aspects, an optimal feed oil amount can be supplied to the bearing portions.

According to the eleventh aspect, the feed oil amount can be switched according to the rotational speed of the machine during the period from the start of operation of the machine until the end of operation of the machine. Thus, oil leakage from the bearing portions can be prevented during stoppage and slow rotation, and a sufficient feed oil amount for cooling can be supplied to the bearing portions during quick rotation.

### Brief Description of the Drawings

The present invention will become more fully understood from the detailed description given hereinbelow and the accompanying drawings which are given by way of illustration only, and thus are not limitative of the present invention, and wherein:
Fig. 1 is a schematic view of a web rotary press (or printing machine) furnished with a rotating body oiling apparatus according to a first embodiment of the present invention;
Fig. 2 is a sectional view of a bearing portion;
Fig. 3 is a block diagram showing the state of connection of a control device;
Fig. 4 is a view showing the relationship between the rotational speed of a plate cylinder and the amount of an oil (feed oil amount) supplied to the bearing portion over the course of time;
Fig. 5 is a flowchart showing the method of oil supply;
Fig. 6 is a schematic view of a web rotary press furnished with a rotating body oiling apparatus according to a second embodiment of the present invention;
Fig. 7 is a block diagram showing the state of connection of a control device;
Fig. 8 is a flowchart showing the method of oil supply;
Fig. 9 is a schematic view of a web rotary press furnished with a rotating body oiling apparatus according to a third embodiment of the present invention;
Fig. 10 is a block diagram showing the state of connection of a control device; and
Fig. 11 is a flowchart showing the method of oil supply.

### Detailed Description

A rotating body oiling apparatus according to the present invention will be described in detail by embodiments with reference to the accompanying drawings. In each embodiment, members having the same structures and functions will be assigned the same numerals and symbols, and duplicate descriptions will be omitted in subsequent embodiments. Arrows shown in the drawings represent the flows of a lubricating oil.

### Embodiment 1:

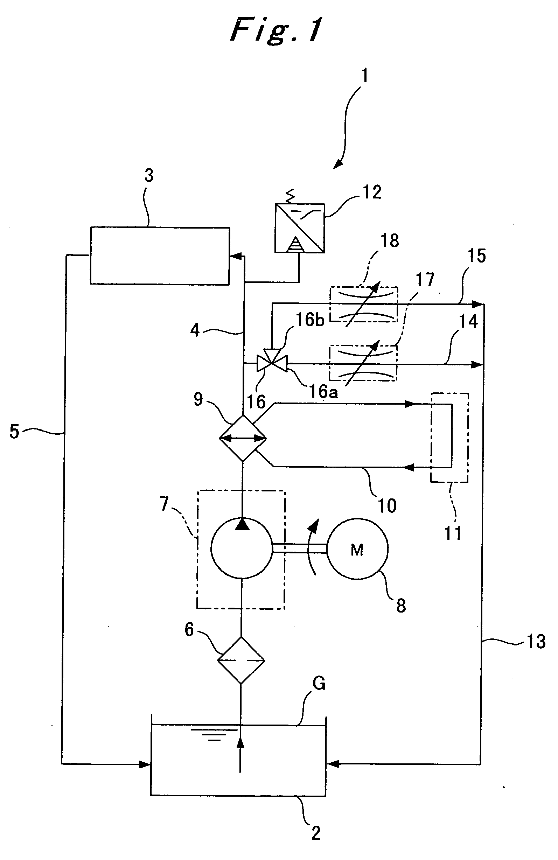

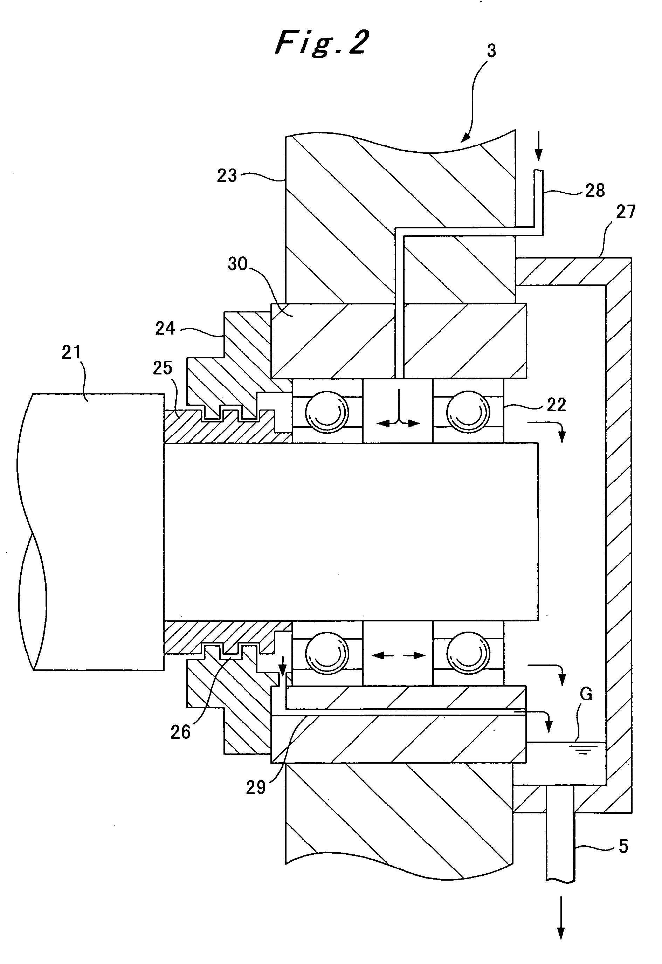

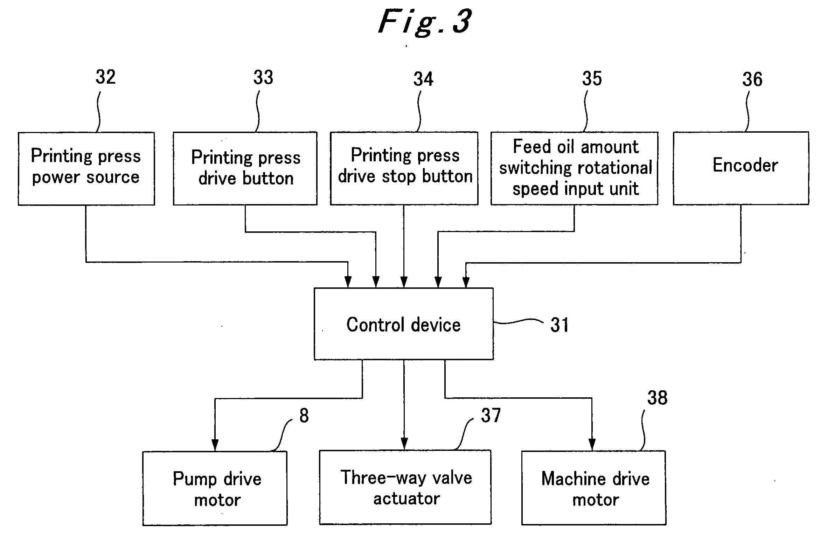

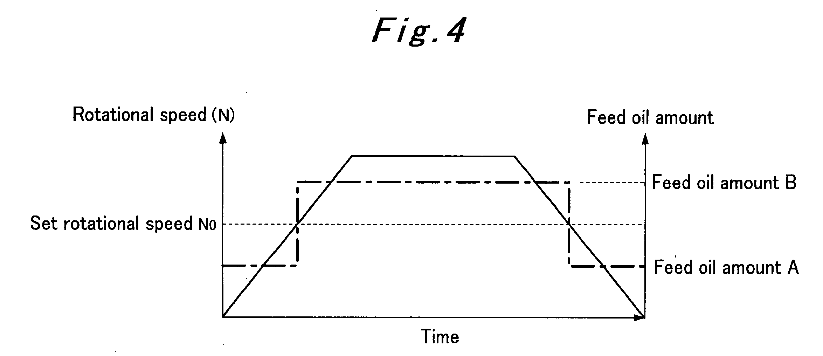

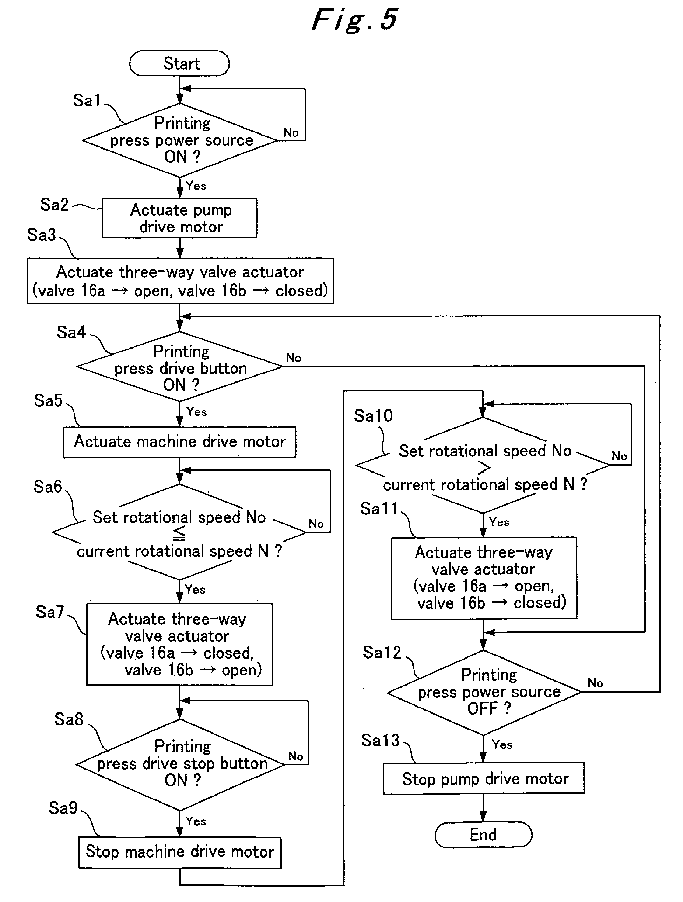

Fig. 1 is a schematic view of a web rotary press (or printing machine) furnished with a rotating body oiling apparatus according to a first embodiment of the present invention. Fig. 2 is a sectional view of a bearing portion. Fig. 3 is a block diagram showing the state of connection of a control device. Fig. 4 is a view showing the relationship between the rotational speed of a plate cylinder and a feed oil amount supplied to the bearing portion over the course of time. Fig. 5 is a flowchart showing the method of oil supply.

As shown in Fig. 1, a web rotary press (or printing machine) 1 is provided with an oil bath 2 storing a lubricating oil G, and a plurality of bearing portions 3 where various rotating bodies, such as cylinders or rollers, are rotatably supported by bearings. The oil bath 2 and the bearing portions 3 are connected by an oil supply pipe 4 and a return pipe 5. That is, the lubricating oil G stored in the oil bath 2 is passed through the oil supply pipe 4 and supplied into the bearing portions 3. The lubricating oil G, which has finished lubrication and cooling, is passed through the return pipe 5 and returned to the oil bath 2 for recirculation.

The oil supply pipe 4 is provided with a filter 6, a pump 7, a heat exchanger 9, and a pressure switch 12 in this order from an upstream side to a downstream side. A pump drive motor 8 is connected to the pump 7, and the pump 7 is actuated by driving the pump drive motor 8. A cooler 11 is connected to the heat exchanger 9 via a cooling pipe 10, and the cooler 11 circulates cooling water through the cooling pipe 10, whereby the lubricating oil G can be cooled within the heat exchanger 9. Furthermore, it is always detected by the pressure switch 12 whether the lubricating oil G supplied to the bearing portions 3 is supplied in a proper amount.

A portion of the oil supplypipe 4 which is intermediate between the heat exchanger 9 and the pressure switch 12 is connected to the oil bath 2 by a return pipe 13. The return pipe 13 has a branch bypass pipe (first bypass pipe) 14 and a branch bypass pipe (second bypass pipe) 15, and the lubricating oil G in the oil supply pipe 4 is passed through the return pipe 13 via the branch bypass pipe 14 or the branch bypass pipe 15 and returned to the oil bath 2. A three-way valve 16 is provided on an upstream side of the return pipe 13, and the branch bypass pipes 14, 15 are connected to valves 16a, 16b of the three-way valve 16. Aregulatingvalve (first valve) 17 and a regulating valve (second valve) 18 are provided in the branch bypass pipes 14 and 15, and the flow rate of the lubricating oil G flowing into the branch bypass pipes 14, 15 is adjusted by adjusting the regulating valves 17, 18.

The oil supply pipe 4, the return pipe 5, the pump 7, and the pump drive motor 8 constitute an oil supply means. The return pipe 13, the branch bypass pipes 14, 15, the three-way valve 16, and the regulating valves 17, 18 constitute a bypass flow rate variable means.

The three-way valve 16 brings one of the valves 16a and 16b to an open state, and the other of them to a closed state, thereby flowing the lubricating oil G, which has flowed into the return pipe 13, into either the branch bypass pipe 14 or the branch bypass pipe 15. These valving actions of the three-way valve 16 can be performed by driving a three-way valve actuator 37 (see Fig. 3) to be described later.

Further, the regulating valves 17, 18 can adjust the flow rate of the lubricating oil G according to the degree to which they are open (so-called valve opening). In the present embodiment, the valve opening of the regulating valve 17 is adjusted to be larger than the valve opening of the regulating valve 18 without fail. That is, the flow rate of the lubricating oil G flowing through the branch bypass pipe 14 when the valve 16a is open is greater than the flow rate of the lubricating oil G flowing through the branch bypass pipe 15 when the valve 16b is open. Thus, the flow rate (feed oil amount) A fed into the bearing portions 3 during opening of the valve 16a is smaller than the flow rate (feed oil amount) B fed into the bearing portions 3 during opening of the valve 16b. This means that the feed oil amount of the lubricating oil G optimal for the bearing portions 3 can be attained by the switching actions of the valves 16a, 16b of the three-way valve 16 and the flow control of the regulating valves 17, 18.

Thus, when the pump drive motor 8 is driven to actuate the pump 7, thereby drawing up the lubricating oil G stored in the oil bath 2 into the oil supply pipe 4, The drawn-up lubricating oil G is passed through the filter 6 for purification, and heat-exchanged (cooled) with cooling water within the heat exchanger 9. Then, the lubricating oil G is branched out into one passing through the oil supply pipe 4 and flowing toward the bearing portions 3, and one flowing toward the return pipe 13. When, at this time, the valve 16a is open and the valve 16b is closed, part of the lubricating oil G is bypassed to the branch bypass pipe 14, and the remaining lubricating oil G in the feed oil amount A is supplied to the bearing portions 3. When the valve 16a is closed and the valve 16b is open, on the other hand, part of the lubricating oil G is bypassed to the branch bypass pipe 15, and the remaining lubricating oil G in the feed oil amount B is supplied to the bearing portions 3. The lubricating oil G bypassed to the return pipe 13 is returned to the oil bath 2, whereas the lubricating oil G in the feed oil amount A or the feed oil amount B, which has finished the lubrication and cooling of the bearing portions 3, is passed through the return pipe 5 and returned to the oil bath 2. The lubricating oil G returned to the oil bath 2 by the return pipes 5, 13 is used for recirculation.

Next, the configuration of the bearing portion 3 will be described with reference to Fig. 2. As stated earlier, a plurality of the bearing portions 3 are provided in the web rotary press 1, and the bearing portion 3 shown in Fig. 2 is described as a bearing portion for a plate cylinder in a printing unit (not shown) provided in the web rotary press 1.

As shown in Fig. 2, the printing unit is provided with a plate cylinder 21, and the plate cylinder 21 is rotatably supported in a housing 30 via a bearing 22. The housing 30 is supported by a frame 23. Axially inwardly of the bearing 22, a labyrinth outer race 24 and a labyrinth inner race 25 constituting a non-contact seal component are provided. The labyrinth outer race 24 is supported by the inner end surface of the bearing 22 and the inner wall of the housing 30, while the labyrinth inner race 25 is supported by the plate cylinder 21. A fine clearance 26 is formed between the labyrinth outer race 24 and the labyrinth inner race 25.

A cover 27 is supported by the outer wall of the frame 23 to cover the bearing 22. An oil supply passage 28 is formed in an upper side of the frame 23 and an upper side of the housing 30, while an oil discharge passage 29 is formed in a lower side of the housing 30. The oil supply passage 28 has one end connected to the oil supply pipe 4, and has the other end communicating with the interior of the bearing 22. The oil discharge passage 29 has one end communicating with the lower end of the bearing 22 located axially inwardly, and has the other end in communication with the bottom of the cover 27. The return pipe 5 communicates with the bottom of the cover 27.

Hence, the lubricating oil G in the feed oil amount A or B supplied from the oil supply pipe 4 is passed through the oil supply passage 28, and supplied into the bearing 22. The lubricating oil G supplied into the bearing 22 enters the axially inward portion of the bearing 22, passes through the oil discharge passage 29, and flows to the bottom of the cover 27. Also, the lubricating oil G passes axially outwardly of the bearing 22, and flows downward to the bottom of the cover 27. The lubricating oil G accumulated at the bottom of the cover 27 passes through the return pipe 5, and returns to the oil bath 2. Through these motions, the lubricating oil G can perform the lubrication and cooling of the bearing portions 3 rotating at a high speed. Thus, wear between the plate cylinder 21 and the bearing 22 can be kept to a minimum, rust formation can be prevented, thermal expansion due to frictional heating can be suppressed, and seizure can be prevented.

Next, a control device 31 provided in the web printing press 1 will be described with reference to Fig. 3.

As shown in Fig. 3, the following members are connected to the control device 31: a printing press power source 32 which is the power source of the web rotary press 1; a printing press drive button 33 for driving a machine drive motor 38; a printing press drive stop button 34 for stopping the machine drive motor 38; a feed oil amount switching rotational speed input unit 35 for inputting the set rotational speed No of the plate cylinder 21 to switch the feed oil amount; and an encoder 36 for detecting the rotational speed N of the plate cylinder 21. Signals sent from these members are inputted to the control device 31. A pump drive motor 8 for driving the pump 7, a three-way valve actuator 37 for driving the three-way valve 16, and the machine drive motor 38 for driving the web rotary press 1 are also connected to the control device 31, and the control device 31 outputs signals to these members.

Thus, when the printing press power source 32 is rendered ON, the web rotary press 1 is energized to come into an operable state. In this operable state, the pump drive motor 8 is driven, and the three-way valve 16 performs a valving action. In the operable state, if the printing press drive button 33 is switched on, the machine drive motor 38 is driven. If the printing press drive stop button 34 is switched on, the machine drive motor 38 is stopped. Moreover, the plate cylinder 21 is connected to be synchronized with the machine drive motor 38. The encoder 36 annexed to the plate cylinder 21 detects the rotational speed of the plate cylinder 21, and outputs its signals to the control device 31.

The control device 31 compares the rotational speed N detected by the encoder 36 with the set rotational speed No preset by the feed oil amount switching rotational speed input unit 35. Based on the results of this comparison, the control device 31 switches between the valves 16a and 16b of the three-way valve 16. That is, during slow rotation and stoppage during which the rotational speed N is less than the set rotational speed No, the feed oil amount supplied to the bearing portions 3 is controlled to the feed oil amount A. During quick rotation during which the rotational speed N is the set rotational speed No or higher, the feed oil amount supplied to the bearing portions 3 is controlled to the feed oil amount B.

Such control of the feed oil amount supplied to the bearing portions 3 based on the rotational speed of the plate cylinder 21 will be described with reference to Fig. 4. A solid line in Fig. 4 represents the rotational speed N of the plate cylinder 21, and a dashed dotted line represents a feed oil amount supplied to the bearing portions 3.

As shown in Fig. 4, when the machine drive motor 38 is driven, the plate cylinder 21 is also driven simultaneously, and gradually increased in speed, with the result that the temperature of the bearing 22 begins to rise gradually. At the start of driving of the machine drive motor 38, the three-way valve 16 has the valve 16a open, and the valve 16b closed, so that the lubricating oil G in the feed oil amount A is supplied to the bearing portions 3. Then, when the rotational speed N of the plate cylinder 21 is increased to the set rotational speed No, the three-way valve 16 is driven to close the valve 16a and open the valve 16b. As a result, the lubricating oil G in the feed oil amount B is supplied to the bearing portions 3. When the rotational speed N of the plate cylinder 21 is further increased, the rotational speed N becomes constant to perform printing. Upon completion of printing, the plate cylinder 21 is gradually decreased in speed, and the rotational speed N reaches the set rotational speed No. When the plate cylinder 21 is further decreased in speed, and the rotational speed N becomes less than the set rotational speed No, the three-way valve 16 is driven to open the valve 16a and close the valve 16b. Thus, the lubricating oil G in the feed oil amount A is supplied to the bearing portions 3.

Next, processing for the oil supply method in the control device 31 will be described with reference to Fig. 5.

In step Sa1, it is determined whether the printing press power source 32 is ON. If ON, the pump drive motor 8 is actuated in step Sa2 to begin the supply of the lubricating oil G stored in the oil bath 2 to the oil supply pipe 4. Then, in step Sa3, the three-way valve actuator 37 is actuated to open the valve 16a and close the valve 16b. Thus, part of the lubricating oil G is supplied to the return pipe 13 and the branch bypass pipe 14, and the remaining lubricating oil G in the feed oil amount A is supplied to the bearing portions 3. If the printing press power source 32 is not ON, detection in step Sa1 is continued.

In step Sa4, it is determined whether the printing press drive button 33 is ON. If the answer is yes, the machine drive motor 38 is actuated in step Sa5 and, simultaneously, the plate cylinder 21 is also actuated. If the answer is no, the program proceeds to step Sa12. Then, in step Sa6, it is determined whether the current rotational speed N of the plate cylinder 21 is equal to or more than the set rotational speed No preset by the feed oil amount switching rotational speed input unit 35. If the answer is yes, the three-way valve actuator 37 is actuated in step Sa7 to close the valve 16a and open the valve 16b, with the result that part of the lubricating oil G is supplied to the return pipe 13 and the branch bypass pipe 15, while the remaining lubricating oil G in the feed oil amount B is supplied to the bearing portions 3. If the answer is no in step Sa6, detection in step Sa6 is continued.

In step Sa8, it is determined whether the printing press drive stop button 34 is ON. If the answer is yes, the machine drive motor 38 is stopped in step Sa9 and, simultaneously, the plate cylinder 21 is also stopped. If the answer is no, detection in step Sa8 is continued. Then, in step Sa10, it is determined whether the current rotational speedN of the plate cylinder 21 is less than the set rotational speed No preset by the feed oil amount switching rotational speed input unit 35. If the answer is yes, the three-way valve actuator 37 is actuated in step Sa11 to open the valve 16a and close the valve 16b, with the result that part of the lubricating oil G is supplied to the return pipe 13 and the branch bypass pipe 14, while the remaining lubricating oil G in the feed oil amount A is supplied to the bearing portions 3. If the answer is no in step Sa10, detection in step Sa10 is continued.

In step Sa12, it is determined whether the printing press power source 32 is OFF. If the answer is yes, the pump drive motor 8 is stopped in step Sa13, the supply of the lubricating oil G stored in the oil bath 2 to the oil supply pipe 4 is stopped, and processing is completed. If the answer is no, the program returns to step Sa4, and processing is continued.

In the above-described processing of the oil supply method, when the rotational speed N is equal to or more than the set rotational speed No (No≤N), the three-way valve actuator 37 is actuated, in steps Sa6 and Sa7. In steps Sa10 and Sa11, when the rotational speed N is less than the set rotational speed No (No>N), the three-way valve actuator 37 is actuated. However, in steps Sa6 and Sa7, when the rotational speed N is higher than the set rotational speed No (No<N), the three-way valve actuator 37 may be actuated, and in steps Sa10 and Sa11, when the rotational speed N is equal to or less than the set rotational speed No (No≥N), the three-way valve actuator 37 may be actuated.

By adopting above-mentioned features, the feed oil amount can be switched according to whether the status is stoppage and slow rotation, or quick rotation. Thus, oil leakage from the bearing portions 3 can be prevented during stoppage and slow rotation, and a sufficient feed oil amount for cooling can be supplied to the bearing portions 3 during quick rotation. Furthermore, the temperature rise of the bearing during quick rotation can be suppressed, so that bearing life can be maintained, malfunctions can be prevented, and printing products can be stabilized.

### Embodiment 2:

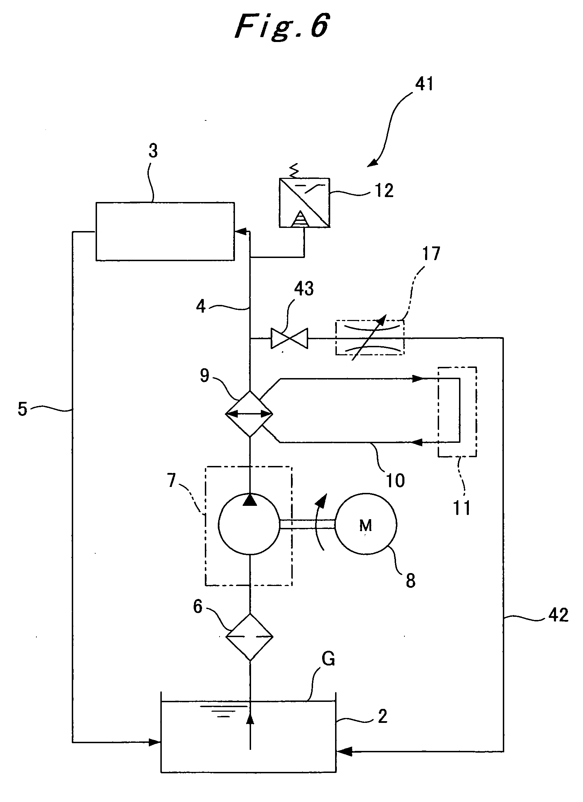

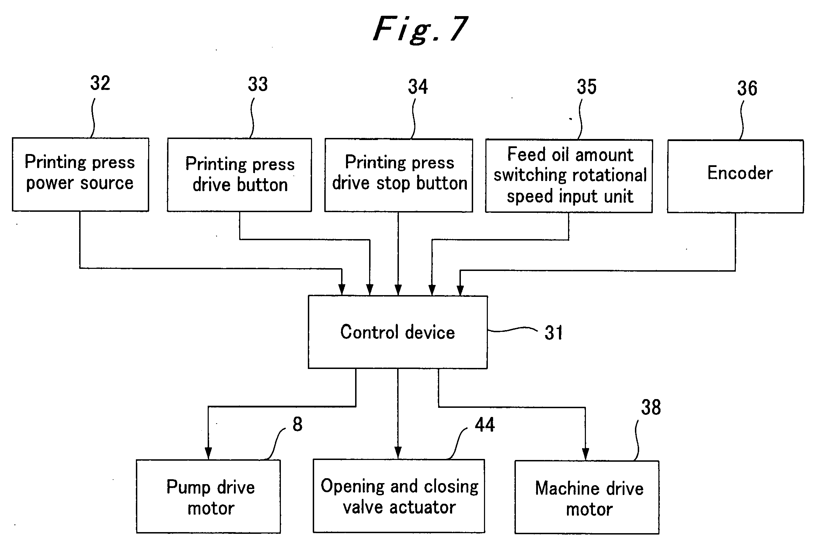

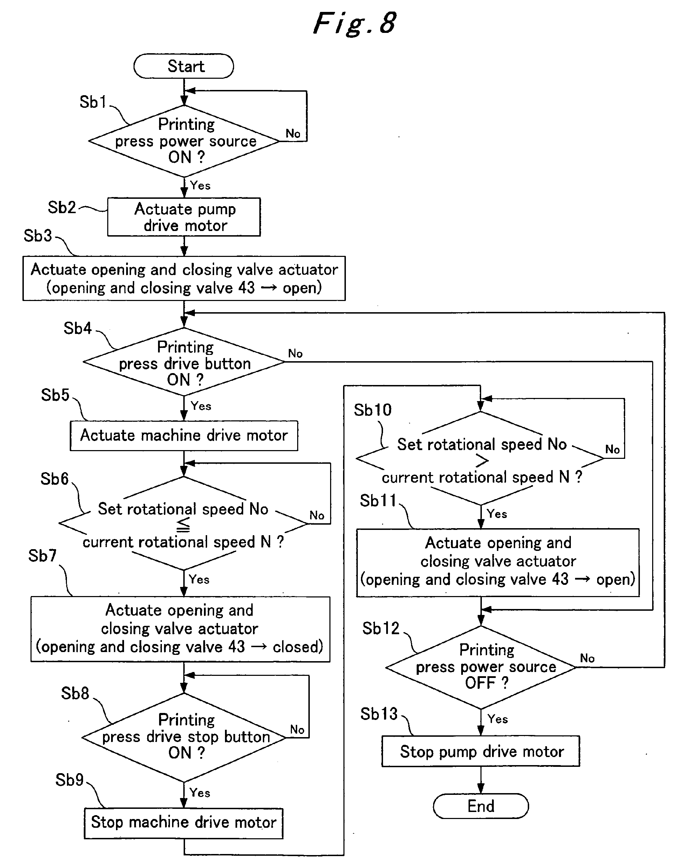

Fig. 6 is a schematic view of a web rotary press furnished with a rotating body oiling apparatus according to a second embodiment of the present invention. Fig. 7 is a block diagram showing the state of connection of a control device. Fig. 8 is a flowchart showing the method of oil supply.

As shown in Fig. 6, a return pipe (bypass pipe) 42 is provided in a web rotary press 41. The return pipe 42 is connected between a portion of an oil supply pipe 4, which is intermediate between a heat exchanger 9 and a pressure switch 12, and an oil bath 2. The return pipe 42 is provided with an opening and closing valve43 and a regulating valve (valve) 17 in this order from an upstream side to a downstream side. The regulating valve 17, the return pipe 42, and the opening and closing valve 43 constitute a bypass means.

The opening and closing valve 43 can adjust the flow rate of the lubricating oil G flowing to the return pipe 42 by its opening and closing. That is, when the opening and closing valve 43 is open, part of the lubricating oil G flowing through the oil supply pipe 4 can flow to the return pipe 42, and the remaining lubricating oil G in the feed oil amount A can flow to bearing portions 3. When the opening and closing valve 43 is closed, on the other hand, all the lubricating oil G in the feed oil amount B, which flows through the oil supply pipe 4, can flow to the bearing portions 3. The valving action of the opening and closing valve 43 can be performed by driving an opening and closing valve actuator 44 (see Fig. 7) to be described later. The flow rate when the opening and closing valve 43 is open can be adjusted by the regulating valve 17.

Thus, when a pump drive motor 8 is driven to actuate a pump 7, thereby drawing up the lubricating oil G stored in the oil bath 2 into the oil supply pipe 4, The drawn-up lubricating oil G is passed through a filter 6 for purification, and heat-exchanged (cooled) with cooling water within the heat exchanger 9. Then, when the opening and closing valve 43 is open, part of the lubricating oil G is bypassed to the return pipe 42 and returned to the oil bath 2, and the remaining lubricating oil G in the feed oil amount A is supplied to the bearing portions 3. When the opening and closing valve 43 is closed, on the other hand, the lubricating oil G as such flows in the feed oil amount B through the oil supply pipe 4, and is supplied to the bearing portions 3. After finishing lubrication and cooling, the lubricating oil G is passed through a return pipe 5, and returned to the oil bath 2. The lubricating oil G returned to the oil bath 2 by way of the return pipes 5 and 42 is used for recirculation.

Next, a control device 31 provided in the web printing press 41 will be described with reference to Fig. 7.

As shown in Fig. 7, the followingmembers are connected to the control device 31: a printing press power source 32 which is the power source of the web rotarypress 41; a printing press drive button 33 for driving a machine drive motor 38; a printing press drive stop button 34 for stopping the machine drive motor 38; a feed oil amount switching rotational speed input unit 35 for inputting the set rotational speed No of the plate cylinder 21 to switch the feed oil amount; and an encoder 36 for detecting the rotational speed N of the plate cylinder 21. Signals sent from these members are inputted to the control device 31. A pump drive motor 8 for driving the pump 7, an opening and closing valve actuator 44 for driving the opening and closing valve 43, and the machine drive motor 38 for driving the web rotary press 41 are also connected to the control device 31, and the control device 31 outputs signals to these members.

Thus, when the printing press power source 32 is rendered ON, the web rotary press 41 is energized to come into an operable state. In this operable state, the pump drive motor 8 is driven, and the opening and closing valve 43 performs a valving action. In the operable state, if the printing press drive button 33 is switched on, the machine drive motor 38 is driven. If the printing press drive stop button 34 is switched on, the machine drive motor 38 is stopped. Moreover, the plate cylinder 21 is connected to be synchronized with the machine drive motor 38. The encoder 36 annexed to the plate cylinder 21 detects the rotational speed of the plate cylinder 21, and outputs its signals to the control device 31.

The control device 31 compares the rotational speed N detected by the encoder 36 with the set rotational speed No preset by the feed oil amount switching rotational speed input unit 35. Based on the results of this comparison, the control device 31 opens or closes the opening and closing valve 43. That is, during slow rotation and stoppage during which the rotational speed N is less than the set rotational speed No, the feed oil amount supplied to the bearing portions 3 is controlled to the feed oil amount A. During quick rotation during which the rotational speed N is the set rotational speed No or higher, the feed oil amount supplied to the bearing portions 3 is controlled to the feed oil amount B.

As shown in Fig. 4, therefore, when the machine drive motor 38 is driven, the plate cylinder 21 is also driven simultaneously, and gradually increased in speed, with the result that the temperature of the bearing 22 begins to rise gradually. At the start of driving of the machine drive motor 38, the opening and closing valve 43 is open, so that the lubricating oil G in the feed oil amount A is supplied to the bearing portions 3. Then, when the rotational speed N of the plate cylinder 21 is increased to the set rotational speed No, the opening and closing valve 43 is driven, whereby the lubricating oil G in the feed oil amount B is supplied to the bearing portions 3. When the rotational speed N of the plate cylinder 21 is further increased, the rotational speed N becomes constant to perform printing. Upon completion of printing, the plate cylinder 21 is gradually decreased in speed, and the rotational speed N reaches the set rotational speed No. When the plate cylinder 21 is further decreased in speed, and the rotational speedNbecomes less than the set rotational speed No, the opening and closing valve 43 is driven, so that the lubricating oil G in the feed oil amount A is supplied to the bearing portions 3.

Next, processing for the oil supply method in the control device 31 will be described with reference to Fig. 8.

In step Sb1, it is determined whether the printing press power source 32 is ON. If ON, the pump drive motor 8 is actuated in step Sb2 to begin the supply of the lubricating oil G stored in the oil bath 2 to the oil supply pipe 4. Then, in step Sb3, the opening and closing valve actuator 44 is actuated to open the opening and closing valve 43. Thus, part of the lubricating oil G is supplied to the return pipe 42, and the remaining lubricating oil G in the feed oil amount A is supplied to the bearing portions 3. If the printing press power source 32 is not ON in step Sb1, detection in step Sb1 is continued.

In step Sb4, it is determined whether the printing press drive button 33 is ON. If the answer is yes, the machine drive motor 38 is actuated in step Sb5 and, simultaneously, the plate cylinder 21 is also actuated. If the answer is no, the program proceeds to step Sb12. Then, in step Sb6, it is determined whether the current rotational speed N of the plate cylinder 21 is equal to or more than the set rotational speed No preset by the feed oil amount switching rotational speed input unit 35. If the answer is yes, the opening and closing valve actuator 44 is actuated in step Sb7 to close the opening and closing valve 43, with the result that none of the lubricating oil G flows to the return pipe 42, but all of the lubricating oil G is supplied to the bearing portions 3. If the answer is no in step Sb6, detection in step Sb6 is continued.

In step Sb8, it is determined whether the printing press drive stop button 34 is ON. If the answer is yes, the machine drive motor 38 is stopped in step Sb9 and, simultaneously, the plate cylinder 21 is also stopped. If the answer is no, detection in step Sb8 is continued. Then, in step Sb10, it is determined whether the current rotational speedN of the plate cylinder 21 is less than the set rotational speed No preset by the feed oil amount switching rotational speed input unit 35. If the answer is yes, the opening and closing valve actuator 44 is actuated in step Sb11 to open the opening and closing valve 43, with the result that part of the lubricating oil G is supplied to the return pipe 42, while the remaining lubricating oil G in the feed oil amount A is supplied to the bearing portions 3. If the answer is no in step Sb10, detection in step Sb10 is continued.

In step Sb12, it is determined whether the printing press power source 32 is OFF. If the answer is yes, the pump drive motor 8 is stopped in step Sb13, the supply of the lubricating oil G stored in the oil bath 2 to the oil supply pipe 4 is stopped, and processing is completed. If the answer is no, the program returns to step Sb4, and processing is continued.

In the above-described processing of the oil supply method, when the rotational speed N is equal to or more than the set rotational speed No (No≤N), the opening and closing valve actuator 44 is actuated, in steps Sb6 and Sb7. In steps Sb10 and Sb11, when the rotational speed N is less than the set rotational speed No (No>N), the opening and closing valve actuator 44 is actuated. However, in steps Sb6 and Sb7, when the rotational speed N is higher than the set rotational speed No (No<N), the opening and closing valve actuator 44 may be actuated, and in steps Sb10 and Sb11, when the rotational speed N is equal to or less than the set rotational speed No (No≥N), the opening and closing valve actuator 44 may be actuated.

In the present embodiment, moreover, when the opening and closing valve 43 is open, the lubricating oil G flowing through the oil supply pipe 4 is bypassed to the return pipe 42, and also supplied to the bearing portions 3. In the closed state of the opening and closing valve 43, the lubricating oil G flowing through the oil supply pipe 4 is all flowed to the bearing portions 3. However, the flow rate of the lubricating oil G flowing to the bearing portions 3 may be controlled either by rendering the valve opening of the opening and closing valve 43 variable, or by adjusting the valve opening of the regulating valve 17 while keeping the opening and closing valve 43 open. By so doing, the feed oil amount supplied to the bearing portions 3 can be controlled based on the rotational speed of the plate cylinder 21, as shown in Fig. 4.

That is, as shown in Fig. 4, when the machine drive motor 38 is driven, the plate cylinder 21 is also driven simultaneously, and gradually increased in speed, with the result that the temperature of the bearing 22 begins to rise gradually. At the start of driving of the machine drive motor 38, the opening and closing valve 43 is open and the valve opening of the regulating valve 17 is adjusted, or the valve opening of the opening and closing valve 43 is adjusted, whereby the lubricating oil G in the feed oil amount A is suppliedto the bearing portions 3. Then, when the rotational speed N of the plate cylinder 21 is increased up to the set rotational speed No, the valve opening of the opening and closing valve 43, or the valve opening of the regulating valve 17 is decreased. As a result, the lubricating oil G in the feed oil amount B is supplied to the bearing portions 3. When the rotational speed N of the plate cylinder 21 is further increased, the rotational speed N becomes constant to perform printing. Upon completion of printing, the plate cylinder 21 is gradually decreased in speed, and the rotational speed N reaches the set rotational speed No. When the plate cylinder 21 is further decreased in speed, and the rotational speed N becomes less than the set rotational speed No, the valve opening of the regulating valve 17, or the valve opening of the opening and closing valve 43 is increased. Thus, the lubricating oil G in the feed oil amount A is supplied to the bearing portions 3.

As described above, the opening and closing valve 43 is opened during stoppage and slow rotation, while the opening and closing valve 43 is closed during quick rotation. Because of this feature, the feed oil amount can be switched according to whether the status is stoppage and slow rotation, or the quick rotation. Thus, oil leakage from the bearing portions 3 can be prevented during stoppage and slow rotation, and a sufficient feed oil amount for cooling can be supplied to the bearing portions 3 during quick rotation.

### Embodiment 3:

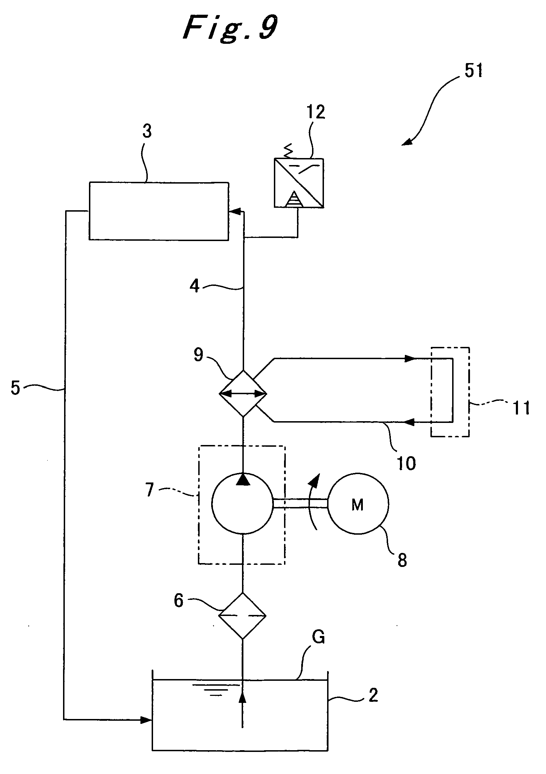

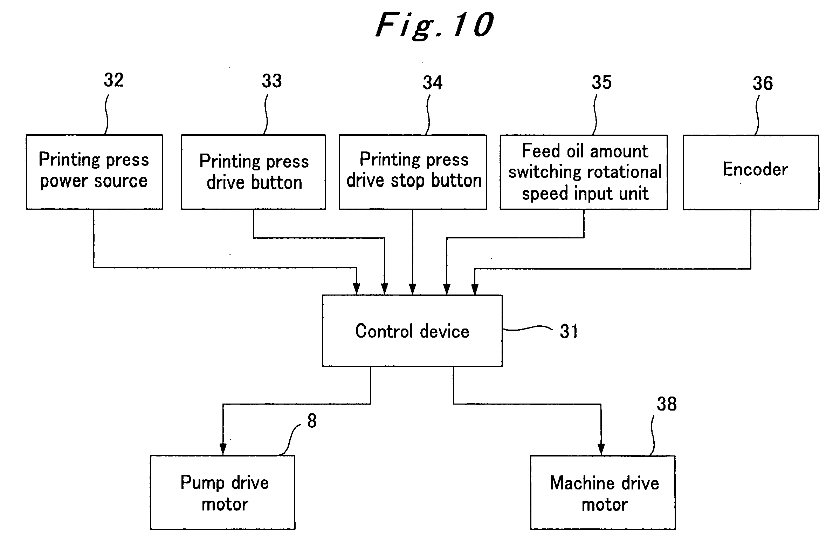

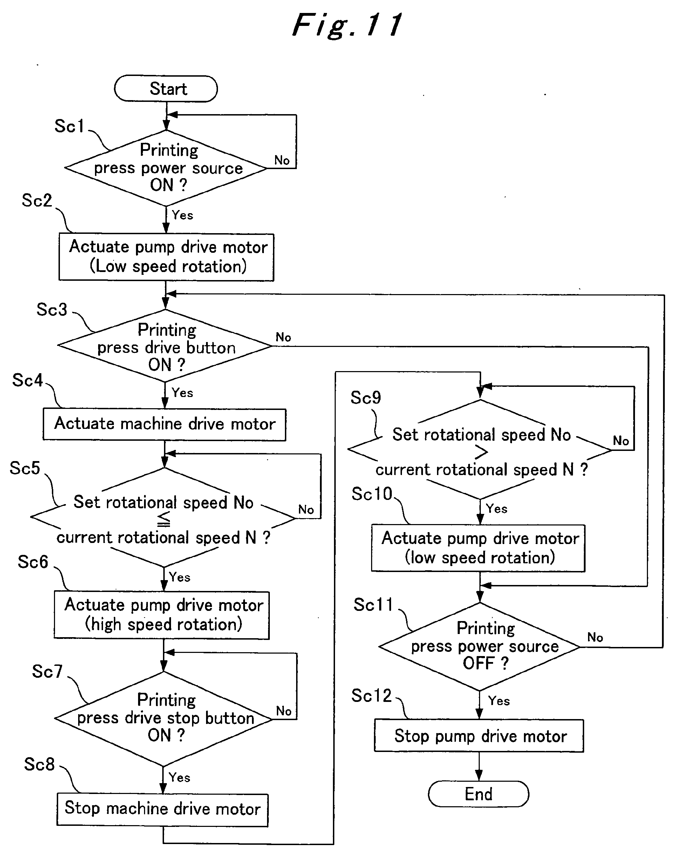

Fig. 9 is a schematic view of a web rotary press furnished with a rotating body oiling apparatus according to a third embodiment of the present invention. Fig. 10 is a block diagram showing the state of connection of a control device. Fig. 11 is a flowchart showing the method of oil supply.

As shown in Fig. 9, a web rotary press 51 is arranged not to bypass the lubricating oil G flowing through an oil supply pipe 4, but to drive and control a pump drive motor 8, thereby adjusting the amount of discharge (feedoil amount) of a pump 7. The pump 7 and the pump drive motor 8 constitute a flow control means.

Thus, when the pump drive motor 8 is driven to actuate the pump 7, thereby drawing up the lubricating oil G stored in an oil bath 2 into the oil supply pipe 4, The drawn-up lubricating oil G is passed through a filter 6 for purification, and heat-exchanged (cooled) with cooling water within a heat exchanger 9. At this time, the amount of discharge (feed oil amount) of the lubricating oil G to the oil supply pipe 4 by the pump 7 is rendered variable by the driving of the pump drive motor 8, and the amount of discharge is controlled to the feed oil amount A or the feed oil amount B. The lubricating oil G in the feed oil amount A or the feed oil amount B supplied to bearing portions 3 finishes lubrication and cooling. Then, the lubricating oil G is passed through a return pipe 5, returned to the oil bath 2, and used for recirculation.

Next, a control device 31 provided in the web printing press 51 will be described with reference to Fig. 10.

As shown in Fig. 10, the following members are connected to the control device 31: a printing press power source 32 which is the power source of the web rotary press 51; a printing press drive button 33 for driving a machine drive motor 38; a printing press drive stop button 34 for stopping the machine drive motor 38; a feed oil amount switching rotational speed input unit 35 for inputting the set rotational speed No of the plate cylinder 21 to switch the feed oil amount; and an encoder 36 for detecting the rotational speed N of the plate cylinder 21. Signals sent from these members are inputted to the control device 31. A pump drive motor 8 for driving the pump 7, and the machine drive motor 38 for driving the web rotary press 51 are also connected to the control device 31, and the control device 31 outputs signals to these members.

Thus, when the printing press power source 32 is rendered ON, the web rotary press 51 is energized to come into an operable state. In this operable state, the pump drive motor 8 is driven, and control over the amount of discharge from the pump 7 is exercised. In the operable state as well, if the printing press drive button 33 is switched on, the machine drive motor 38 is driven. If the printing press drive stop button 34 is switched on, the machine drive motor 38 is stopped. Moreover, the plate cylinder 21 is connected to be synchronized with the machine drive motor 38. The encoder 36 annexed to the plate cylinder 21 detects the rotational speed of the plate cylinder 21, and outputs its signals to the control device 31.

The control device 31 compares the rotational speed N detected by the encoder 36 with the set rotational speed No preset by the feed oil amount switching rotational speed input unit 35. Based on the results of this comparison, the control device 31 switches the amount of discharge from the pump 7. That is, during slow rotation and stoppage during which the rotational speed N is less than the set rotational speed No, the feed oil amount supplied to the bearing portions 3 is controlled to the feed oil amount A. During quick rotation during which the rotational speed N is the set rotational speed No or higher, the feed oil amount supplied to the bearing portions 3 is controlled to the feed oil amount B.

That is, as shown in Fig. 4, when the machine drive motor 38 is driven, the plate cylinder 21 is also driven simultaneously, and gradually increased in speed, with the result that the temperature of the bearing 22 begins to rise gradually. At the start of driving of the machine drive motor 38, the amount of discharge from the pump 7 is controlled by the pump drive motor 8, so that the lubricating oil G in the feed oil amount A is supplied to the bearing portions 3. Then, when the rotational speed N of the plate cylinder 21 is increased to the set rotational speed No, the amount of discharge from the pump 7 is controlled to be increased, whereby the lubricating oil G in the feed oil amount B is supplied to the bearing portions 3. When the rotational speed N of the plate cylinder 21 is further increased, the rotational speed N becomes constant to perform printing. Upon completion of printing, the plate cylinder 21 is gradually decreased in speed, and the rotational speed N reaches the set rotational speed No. When the plate cylinder 21 is further decreased in speed, and the rotational speedNbecomes less than the set rotational speed No, the amount of discharge from the pump 7 is controlled to be decreased, so that the lubricating oil G in the feed oil amount A is supplied to the bearing portions 3.

Next, processing for the oil supply method in the control device 31 will be described with reference to Fig. 11.

In step Sc1, it is determined whether the printing press power source 32 is ON. If ON, the pump drive motor 8 is actuated with low speed rotation in step Sc2 to control the lubricating oil G discharged from the pump 7 to the feed oil amount A. If the printing press power source 32 is not ON in step Sc1, detection in step Sc1 is continued.

In step Sc3, it is determined whether the printing press drive button 33 is ON. If the answer is yes, the machine drive motor 38 is actuated in step Sc4 and, simultaneously, the plate cylinder 21 is also actuated. If the answer is no, the program proceeds to step Sc11. Then, in step Sc5, it is determined whether the current rotational speed N of the plate cylinder 21 is equal to or more than the set rotational speed No preset by the feed oil amount switching rotational speed input unit 35. If the answer is yes, the pump drive motor 8 is actuated with high speed rotation in step Sc6 to control the lubricating oil G discharged from the pump 7 to the feed oil amount B. If the answer is no in step Sc5, detection in step Sc5 is continued.

In step Sc7, it is determined whether the printing press drive stop button 34 is ON. If the answer is yes, the machine drive motor 38 is stopped in step Sc8 and, simultaneously, the plate cylinder 21 is also stopped. If the answer is no, detection in step Sc7 is continued. Then, in step Sc9, it is determined whether the current rotational speedN of the plate cylinder 21 is less than the set rotational speed No preset by the feed oil amount switching rotational speed input unit 35. If the answer is yes, the pump drive motor 8 is actuated with low speed rotation in step Sc10 to control the lubricating oil G discharged from the pump 7 to the feed oil amount A. If the answer is no in step Sc9, detection in step Sc9 is continued.

In step Sc11, it is determined whether the printing press power source 32 is OFF. If the answer is yes, the pump drive motor 8 is stopped in step Sc12, the supply of the lubricating oil G stored in the oil bath 2 to the oil supply pipe 4 is stopped, and processing is completed. If the answer is no, the program returns to step Sc3, and processing is continued.

In the above-described processing of the oil supply method, when the rotational speed N is equal to or more than the set rotational speed No (No≤N), the pump drive motor 8 is actuated with high speed rotation, in steps Sc5 and Sc6. In steps Sc9 and Sc10, when the rotational speed N is less than the set rotational speed No (No>N), the pump drive motor 8 is actuated with low speed rotation. However, in steps Sc5 and Sc6, when the rotational speed N is higher than the set rotational speed No (No<N), the pump drive motor 8 may be actuated to make high speed rotation, and in steps Sc9 and Sc10, when the rotational speed N is equal to or less than the set rotational speed No (No≥N), the pump drive motor 8 may be actuated to make low speed rotation.

As described above, the pump drive motor 8 is driven to make low speed rotation during stoppage and slow rotation, while the pump drive motor 8 is driven to make high speed rotation during quick rotation. Because of this feature, the feed oil amount can be switched according to whether the status is stoppage and slow rotation, or quick rotation. Thus, oil leakage from the bearing portions 3 can be prevented during stoppage and slow rotation, and a sufficient feed oil amount for cooling can be supplied to the bearing portions 3 during quick rotation.

The above-described oiling apparatus of the present invention can be applied to a rotating body oiling apparatus which is used for a wide range of rotation ranging from slow rotation to quick rotation.

While the present invention has been described by the above embodiments, it is to be understood that the invention is not limited to these embodiments, but may be varied in many other ways. In the first embodiment, for example, part of the lubricating oil G is bypassed from the oil supply pipe 4 to the return pipe 13 via the branch bypass pipes 14, 15, the three-way valve 16, and the regulating valves 17, 18. However, part of the lubricating oil Gmaybe bypassed from the oil supply pipe 4 to the return pipe 5 via the branch bypasspipes 14, 15, the three-way valve 16, and the regulating valves 17, 18. Similarly, in the second embodiment, part of the lubricating oil G is bypassed from the oil supply pipe 4 to the return pipe 42 via the regulating valve 17 and the opening and closing valve 43. However, part of the lubricating oil G may be bypassed from the oil supply pipe 4 to the return pipe 5 via the regulating valve 17 and the opening and closing valve 43. Furthermore, the set rotational speed No is inputted beforehand into the feed oil amount switching rotational speed input unit 35. However, the set rotational speed No may be inputted beforehand into the control device 31. Such variations are not to be regarded as a departure from the spirit and scope of the invention, and all such modifications as would be obvious to one skilled in the art are intended to be included within the scope of the following claims.

## Claims

1. A rotating body oiling apparatus including a rotating body (21) rotatably supported in a frame (23) via a bearing (22), and oil supply means (4, 5, 7, 8) for supplying a lubricating oil (G) to the bearing (22), and discharging the lubricating oil (G) to an outside of the bearing (22),
comprising control means (31) which controls the oil supply means (4, 7, 8) to increase a feed amount of the lubricating oil (G) when a rotational speed of the rotating body (21) is equal to or higher than a predetermined rotational speed (No).

2. The rotating body oiling apparatus according to claim 1, further comprising
bypass flow rate variable means (13, 14, 15, 16, 17, 18) for bypassing part of the lubricating oil (G) to be supplied, and rendering a flow rate of the bypassed part variable, and
wherein the control means (31) controls the bypass flow rate variable means (13, 14, 15, 16, 17, 18) to increase the feed amount of oil supplied to the bearing (22) when the rotational speed of the rotating body (21) is equal to or higher than a predetermined rotational speed (No).

3. The rotating body oiling apparatus according to claim 2, **characterized in that** the bypass flow rate variable means (13, 14, 15, 16, 17, 18) comprises
a first bypass pipe (14) provided with a first valve (17),
a second bypass pipe (15) provided with a second valve (18) smaller in valve opening than the first valve (17), and
a switching valve (16, 16a, 16b) for supplying the part of the lubricating oil (G) to the first bypass pipe (14) or the second bypass pipe (15).

4. The rotating body oiling apparatus according to claim 3, **characterized in that** the control means (31)
controls the switching valve (16, 16a, 16b) to supply the lubricating oil (G) to the second bypass pipe (15) when the rotational speed of the rotating body (21) is equal to or higher than a predetermined rotational speed (No), and
controls the switching valve (16, 16a, 16b) to supply the lubricating oil (G) to the first bypass pipe (14) when the rotational speed of the rotating body (21) is equal to or lower than a predetermined rotational speed (No).

5. The rotating body oiling apparatus according to claim 1, further comprising
bypass means (17, 42, 43) for bypassing part of the lubricating oil (G), which is to be supplied, by an opening and closing action, and
wherein the control means (31) controls the bypass means (17, 42, 43) to increase the feed amount of oil supplied to the bearing (22) when the rotational speed of the rotating body (21) is equal to or higher than a predetermined rotational speed (No).

6. The rotating body oiling apparatus according to claim 5, **characterized in that** the bypass means (17, 42, 43) comprises
an opening and closing valve (43) for bypassing the part of the lubricating oil (G), which is to be supplied, to a bypass pipe (42), and
a valve (17) provided in the bypass pipe (42).

7. The rotating body oiling apparatus according to claim 6, **characterized in that** the control means (31)
controls the opening and closing valve (43) not to supply the lubricating oil (G) to the bypass pipe (42) when the rotational speed of the rotating body (21) is equal to or higher than a predetermined rotational speed (No), and
controls the opening and closing valve (43) to supply the lubricating oil (G) to the bypass pipe (42) when the rotational speed of the rotating body (21) is equal to or lower than a predetermined rotational speed (No).

8. The rotating body oiling apparatus according to claim 1, further comprising
flow control means (7, 8) for rendering a flow rate of the lubricating oil (G), which is to be supplied, variable, and
wherein the control means (31) controls the flow control means (7, 8) to increase the feed amount of oil supplied to the bearing (22) when the rotational speed of the rotating body (21) is equal to or higher than a predetermined rotational speed (No).

9. The rotating body oiling apparatus according to claim 8, **characterized in that** the flow control means (7, 8) comprises
a pump (7) for supplying the lubricating oil (G) to the bearing (22), and
a pump motor (8) for adjusting an amount of discharge from the pump (7).

10. The rotating body oiling apparatus according to claim 9, **characterized in that** the control means (31)
controls the pump motor (8) to increase the feed amount of oil supplied to the bearing (22) when the rotational speed of the rotating body (21) is equal to or higher than a predetermined rotational speed (No), and
controls the pump motor (8) to decrease the feed amount of oil supplied to the bearing (22) when the rotational speed of the rotating body (21) is equal to or lower than a predetermined rotational speed (No).

11. The rotating body oiling apparatus according to claim 1, **characterized in that**
when the rotational speed of the rotating body (21) is equal to or lower than a predetermined rotational speed (No), and the rotating body (21) stops, after the rotational speed of the rotating body (21) is equal to or higher than a predetermined rotational speed (No),
the control means (31) controls the oil supply (4, 7, 8) means to supply the oil feed amount smaller than the feed amount of oil supplied when the rotational speed of the rotating body (21) is equal to or higher than a predetermined rotational speed (No).
